# FASCICULE DE BREVET EUROPEEN

(11) **EP 3 079 529 B1**
(45) Date de publication et mention de la délivrance du brevet: **06.11.2019**
(21) Numéro de dépôt: 14827488.9
(22) Date de dépôt: 10.12.2014
(51) Int. Cl.: A47J 27/04, A23L 5/10

(54) **PROCEDE ET APPAREIL DE CHAUFFAGE ET/OU DE CUISSON D'ALIMENTS A LA VAPEUR**
VERFAHREN UND VORRICHTUNG ZUM ERWÄRMEN UND/ODER KOCHEN VON LEBENSMITTELN MIT DAMPF
METHOD AND APPLIANCE FOR HEATING AND/OR COOKING FOODS WITH STEAM

(30) Priorité: 13.12.2013 FR 1362546
(43) Date de publication de la demande: 19.10.2016
(73) Titulaire: SEB S.A., 69130 Ecully (FR)
(72) Inventeur: VALANCE, Nicolas, 21121 Val Suzon (FR); BLOND, Laurent, 21200 Beaune (FR)
(74) Mandataire: Bourrières, Patrice
(86) Numéro de dépôt international: PCT/FR2014/053251
(87) Numéro de publication internationale: WO 2015/086989

(56) Documents cités:
- EP-A1- 1 651 084
- WO-A1-2004/037055
- CA-A1- 1 199 191

## Description

La présente invention concerne le domaine technique des procédés et des appareils pour cuire et/ou chauffer des aliments en utilisant de la vapeur.

La présente invention concerne plus particulièrement les procédés et les appareils dans lesquels le contact des aliments avec la vapeur est limité ou évité.

Il est connu du document EP 1 651 084 un appareil pour cuire et/ou chauffer des aliments, comportant un dispositif de production de vapeur et un couvercle monté mobile par rapport à un réceptacle. Toutefois la vapeur issue du dispositif de production de vapeur est injectée dans l'enceinte de cuisson formée par le couvercle et le réceptacle tout au long de la cuisson.

Un objet de la présente invention est de proposer un procédé pour cuire et/ou chauffer des aliments en utilisant de la vapeur, qui favorise la conservation des vitamines et des minéraux, ainsi que la préservation du goût des aliments.

Un autre objet de la présente invention est de proposer un procédé pour cuire et/ou chauffer des aliments en utilisant de la vapeur, qui permette de simplifier la chauffe et/ou la cuisson des aliments.

Un autre objet de la présente invention est de proposer un procédé pour cuire et/ou chauffer des aliments en utilisant de la vapeur, qui permette de cuire et/ou chauffer des aliments rapidement.

Un autre objet de la présente invention est de proposer un procédé pour cuire et/ou chauffer des aliments en utilisant de la vapeur, qui permette de préparer des sauces et/ou des plats en sauce.

Un autre objet de la présente invention est de proposer un procédé pour cuire et/ou chauffer des aliments en utilisant de la vapeur, dans lequel l'écrasement des aliments est limité ou évité.

Un autre objet de la présente invention est de proposer un appareil pour cuire et/ou chauffer des aliments en utilisant de la vapeur, qui favorise la conservation des vitamines et des minéraux, ainsi que la préservation du goût des aliments.

Un autre objet de la présente invention est de proposer un appareil pour cuire et/ou chauffer des aliments en utilisant de la vapeur, qui soit simple à utiliser.

Un autre objet de la présente invention est de proposer un appareil pour cuire et/ou chauffer des aliments en utilisant de la vapeur, qui permette de cuire et/ou chauffer des aliments rapidement.

Un autre objet de la présente invention est de proposer un appareil pour cuire et/ou chauffer des aliments en utilisant de la vapeur, qui permette de préparer des sauces et/ou des plats en sauce.

Un autre objet de la présente invention est de proposer un appareil pour cuire et/ou chauffer des aliments en utilisant de la vapeur, dans lequel la réalisation de plusieurs plats successifs est facilitée.

Un autre objet de la présente invention est de proposer un appareil pour cuire et/ou chauffer des aliments en utilisant de la vapeur, dans lequel l'écrasement des aliments est limité ou évité.

Ces objets sont atteints avec un procédé pour cuire et/ou chauffer des aliments consistant à alimenter en vapeur une chambre d'expansion de vapeur comportant une paroi de confinement déformable et/ou mobile délimitant partiellement une enceinte recevant des aliments à chauffer et/ou à cuire. Ainsi les aliments peuvent être cuits de manière confinée en limitant ou en supprimant le lessivage des aliments par la vapeur. Un tel procédé permet de favoriser la conservation des vitamines et des minéraux, ainsi que la préservation du goût des aliments. Ce procédé ne nécessite pas de conditionnement préalable des aliments, qui peuvent être simplement disposés dans l'enceinte. Des sauces et/ou des plats en sauce peuvent être préparés en utilisant ce procédé.

Avantageusement, le procédé consiste à alimenter l'enceinte en vapeur avant de réaliser au moins une phase de chauffe et/ou de cuisson sans alimenter l'enceinte en vapeur. Cette disposition permet d'obtenir une montée en température plus rapide des aliments présents dans l'enceinte, favorable à la conservation des vitamines et des minéraux, tout en bénéficiant d'une chauffe et/ou d'une cuisson confinée des aliments lorsque les aliments sont suffisamment montés en température, qui permet d'éviter le lessivage des aliments par la vapeur.

Selon un mode de réalisation, le procédé consiste à alimenter l'enceinte en vapeur pendant une durée déterminée. Cette disposition permet d'éviter l'utilisation d'une mesure de température, une telle mesure étant difficile à réaliser de manière simple et économique pour obtenir une valeur fiable de la température des aliments. Le procédé peut notamment consister à alimenter l'enceinte en vapeur pendant une durée comprise entre 1 et 3 minutes. Une montée en température rapide contribue à une meilleure conservation des vitamines et des minéraux.

Selon un autre mode de réalisation, le procédé consiste à utiliser une enceinte comportant au moins une ouverture d'admission alimentée en vapeur, pour injecter de la vapeur dans l'enceinte par la ou les ouvertures d'admission, dans une première phase, et à utiliser l'alimentation en vapeur de la chambre d'expansion de vapeur pour obturer la ou les ouvertures d'admission avec la paroi de confinement, dans une seconde phase. Un tel procédé permet d'alimenter l'enceinte en vapeur pendant la première phase puis d'arrêter l'alimentation de l'enceinte en vapeur pendant une seconde phase, sans nécessiter de durée réduite. Ces dispositions ne nécessitent pas de dispositifs de commande particuliers.

Avantageusement encore, le procédé consiste à utiliser une enceinte comportant au moins une ouverture d'évacuation et à alimenter l'enceinte en vapeur pour chasser l'air présent dans l'enceinte par la ou les ouvertures d'évacuation. Cette disposition permet d'expulser l'air présent dans l'enceinte lorsque de la vapeur est admise dans l'enceinte, ce qui contribue également à accélérer la chauffe et/ou la cuisson des aliments présents dans l'enceinte. L'expulsion de l'air, et donc de l'oxygène, hors de l'enceinte contribue aussi à limiter l'oxydation des nutriments sensibles.

Avantageusement alors, le procédé consiste à utiliser l'alimentation en vapeur de la chambre d'expansion de vapeur pour obturer la ou les ouvertures d'évacuation avec la paroi de confinement. Ces dispositions ne nécessitent pas de dispositifs de commande spécifiques pour obturer la ou les ouvertures d'évacuation.

Avantageusement encore, le procédé consiste à réguler la pression régnant dans la chambre d'expansion de vapeur. Cette disposition permet de limiter l'écrasement des aliments.

Avantageusement alors, le procédé consiste à limiter la pression régnant dans la chambre d'expansion de vapeur à une valeur inférieure ou égale à 10 millibars, et de préférence inférieure ou égale à 5 millibars. De telles valeurs permettent notamment de plaquer la paroi de confinement contre les aliments en limitant leur écrasement.

Avantageusement encore, le procédé peut comprendre une étape consistant à injecter de l'air dans la chambre d'expansion de vapeur, pour déformer et/ou déplacer la paroi de confinement vers l'intérieur de l'enceinte. Cette disposition permet d'améliorer le placage de la paroi de confinement sur les aliments. Cette disposition permet notamment d'éviter la rétractation de la paroi de confinement après l'arrêt de l'alimentation en vapeur de la chambre d'expansion de vapeur, sous l'effet de la condensation de la vapeur.

Avantageusement encore, le procédé peut comprendre une étape consistant à aspirer au moins une partie de l'air présent dans l'enceinte, pour déformer et/ou déplacer la paroi de confinement vers l'intérieur de l'enceinte. Cette disposition permet également d'améliorer le placage de la paroi de confinement sur les aliments, si désiré avant le début de l'alimentation en vapeur de la chambre d'expansion de vapeur. Cette disposition permet d'obtenir une meilleure conduction thermique pour la cuisson et/ou le chauffage des aliments.

Ces objets sont atteints également avec un appareil pour cuire et/ou chauffer des aliments, comportant un dispositif de production de vapeur et une enceinte pour recevoir les aliments à chauffer et/ou à cuire, du fait que cet appareil comporte une chambre d'expansion de vapeur alimentée en vapeur par le dispositif de production de vapeur, et en ce que la chambre d'expansion de vapeur comporte une paroi de confinement déformable et/ou mobile délimitant partiellement l'enceinte. Ainsi la paroi de confinement est échauffée par la vapeur issue du dispositif de production de vapeur. Cette disposition permet d'envisager une cuisson confinée sans utiliser de sachet de cuisson. La paroi déformable et/ou mobile peut venir en contact avec les aliments pour contribuer à leur chauffe et/ou leur cuisson.

Selon une forme de réalisation avantageuse, la paroi de confinement est au moins partiellement réalisée en matériau souple élastiquement déformable. Cette disposition permet de faciliter l'ajustement du volume de l'enceinte aux aliments présents dans le réceptacle. Cette disposition contribue également à améliorer les performances des échanges thermiques entre la vapeur et les aliments. En alternative, la paroi de confinement peut notamment comporter au moins une partie rigide entourée par une partie déformable.

Avantageusement alors, la paroi de confinement présente une position de repos au moins partiellement concave par rapport à l'enceinte. Cette disposition permet d'obtenir une enceinte de volume plus important tout en conservant une construction compacte.

Avantageusement encore, l'enceinte est délimitée partiellement par un réceptacle amovible. Cette disposition permet de faciliter la mise en place et le retrait des aliments. Cette disposition permet également de faciliter le nettoyage de l'appareil.

Avantageusement alors, le réceptacle porte un support ajouré amovible et présente un espace de récupération de jus agencé en dessous d'une partie ajourée du support ajouré. Cette disposition permet de recueillir les jus de cuisson s'écoulant hors des aliments.

Avantageusement encore, l'enceinte comporte au moins une ouverture d'admission communiquant avec le dispositif de production de vapeur pour injecter de la vapeur dans l'enceinte. Cette disposition permet d'obtenir une élévation plus rapide de la température des aliments présents dans l'enceinte, en injectant de la vapeur dans l'enceinte au début de la chauffe et/ou de la cuisson des aliments, pour les saturer en vapeur.

Avantageusement alors, la ou les ouvertures d'admission sont agencées dans le réceptacle. Cette disposition permet d'obtenir une construction particulièrement simple.

Avantageusement encore, la paroi de confinement déplacée par la vapeur présente dans la chambre d'expansion de vapeur peut occuper au moins une position obturant la ou les ouvertures d'admission. Cette disposition permet d'injecter de la vapeur dans l'enceinte pendant une période limitée, tout en conservant une construction simple de l'appareil.

Avantageusement encore, l'enceinte comporte au moins une ouverture d'évacuation communiquant avec l'extérieur de l'appareil. Cette disposition permet notamment d'expulser l'air présent dans l'enceinte lorsque de la vapeur est admise dans l'enceinte. L'expulsion de l'air hors de l'enceinte contribue également à accélérer la chauffe et/ou la cuisson des aliments présents dans l'enceinte. L'expulsion de l'air, et donc de l'oxygène, hors de l'enceinte contribue aussi à limiter l'oxydation des nutriments sensibles.

Avantageusement alors, la ou les ouvertures d'évacuation sont ménagées dans une bague d'étanchéité appartenant à une partie de l'enceinte mobile par rapport au réceptacle. Cette disposition permet d'obtenir une construction particulièrement simple.

Avantageusement encore, la paroi de confinement déplacée par la vapeur présente dans la chambre d'expansion de vapeur peut occuper au moins une position obturant la ou les ouvertures d'évacuation. Ainsi le confinement de l'enceinte contenant les aliments peut être simplement obtenu par le remplissage de la chambre d'expansion de vapeur, après l'expulsion de l'air. Cette disposition permet de simplifier la construction de l'appareil.

Avantageusement encore, l'appareil comporte des moyens de commande pour piloter la production de vapeur du dispositif de production de vapeur en fonction de la pression de vapeur régnant dans la chambre d'expansion de vapeur. Cette disposition permet de limiter l'écrasement des aliments.

Avantageusement encore, les moyens de commande sont prévus pour mettre en œuvre le procédé de cuisson selon l'une au moins des caractéristiques précitées.

L'invention sera mieux comprise à l'étude d'un exemple de réalisation, pris à titre nullement limitatif, illustré dans les figures 1 à 11 annexées, dans lesquelles :
- la figure 1 est une vue en perspective et en coupe partielle d'un exemple de réalisation d'un appareil pour cuire et/ou chauffer les aliments selon l'invention, dans laquelle l'enceinte pour recevoir les aliments à cuire et/ou à chauffer est en configuration fermée,
- la figure 2 est une vue en perspective d'un support ajouré utilisé avec un réceptacle appartenant à l'appareil illustré sur la figure 1,
- la figure 3 est une vue en perspective et en coupe du support ajouré et du réceptacle illustrés sur la figure 2, avec une partie agrandie,
- la figure 4 est une vue en perspective avant de l'appareil illustré sur la figure 1, dans laquelle l'enceinte pour recevoir les aliments à cuire et/ou à chauffer est en configuration ouverte, le réceptacle illustré sur les figures 2 et 3 ayant été retiré,
- la figure 5 est une vue en perspective arrière de l'appareil illustré sur la figure 4, dans laquelle un élément de boîtier a été retiré pour montrer une partie de la circulation de la vapeur,
- la figure 6 est une vue en perspective avant de l'appareil illustré sur la figure 4, dans laquelle le réceptacle illustré sur les figures 2 et 3 est en place, montrant l'injection de vapeur dans l'enceinte,
- la figure 7 est un schéma comparatif montrant la montée en température dans l'enceinte, avec injection de vapeur et sans injection de vapeur,
- la figure 8 est une vue partielle en perspective arrière de l'appareil illustré sur la figure 1, montrant des ouvertures d'évacuation d'air,
- la figure 9 est un schéma comparatif montrant la montée en température dans l'enceinte, avec évacuation de l'air et sans évacuation de l'air,
- la figure 10 est une vue en coupe et en élévation de l'appareil illustré sur la figure 1, montrant une paroi de confinement de l'appareil en configuration de repos,
- la figure 11 est une vue en coupe et en élévation de l'appareil illustré sur la figure 1, montrant la paroi de confinement de l'appareil en configuration de travail sous l'action de la vapeur.

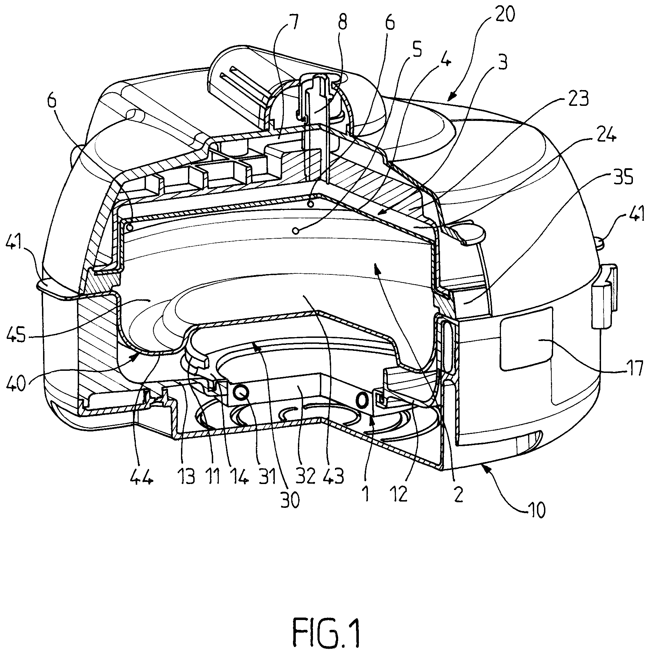

L'appareil pour cuire et/ou chauffer des aliments illustré sur la figure 1 comporte un dispositif de production de vapeur 1 et une enceinte 2 pour recevoir les aliments à cuire et/ou à chauffer.

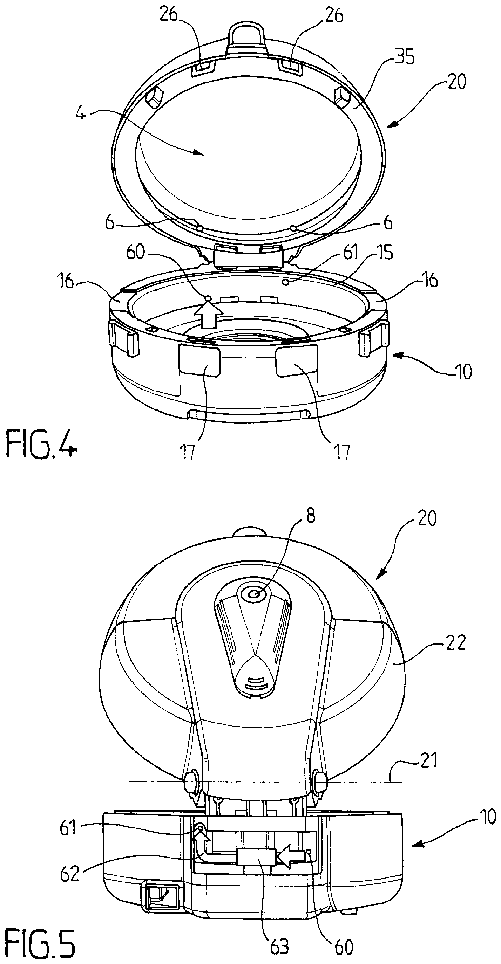

L'enceinte 2 peut présenter une configuration fermée, pour cuire et/ou chauffer les aliments, représentée sur la figure 1, et une configuration ouverte, représentée sur les figures 4, 5 et 6, dans laquelle les aliments peuvent être mis en place ou retirés.

Dans l'exemple de réalisation illustré sur les figures, l'enceinte 2 est formée entre un réceptacle 40 et un couvercle 20. Le réceptacle 40 est prévu pour recevoir les aliments à cuire et/ou à chauffer. De préférence, le réceptacle 40 est amovible, pour permettre un service à table.

Dans l'exemple de réalisation illustré sur les figures, le couvercle 20 est monté mobile sur un corps principal 10. Le couvercle 20 est par exemple monté pivotant sur le corps principal 10 selon un axe 21 sensiblement horizontal, tel que représenté sur la figure 5.

Le dispositif de production de vapeur 1 comporte un réservoir d'eau 30 associé à un élément chauffant 31.

Dans l'exemple de réalisation illustré sur les figures, le dispositif de production de vapeur 1 est agencé en dessous de l'enceinte 2. Le dispositif de production de vapeur 1 est agencé dans le corps principal 10. Le réservoir d'eau 30 est délimité par une nervure annulaire 11 ménagée sur un fond 12 d'une cuve interne 13 du corps principal 10. L'élément chauffant 31 est intégré à une plaque de chauffe 32. L'élément chauffant 31 et la plaque de chauffe 32 peuvent appartenir à un fond chauffant utilisé dans les bouilloires. L'élément chauffant 31 peut par exemple présenter une puissance de 2000 W. La plaque de chauffe 32 est entourée par la nervure annulaire 11. Un joint annulaire 14 est interposé entre la plaque de chauffe 32 et la nervure annulaire 11. La plaque de chauffe 32 forme ainsi la majeure partie du fond du réservoir d'eau 30.

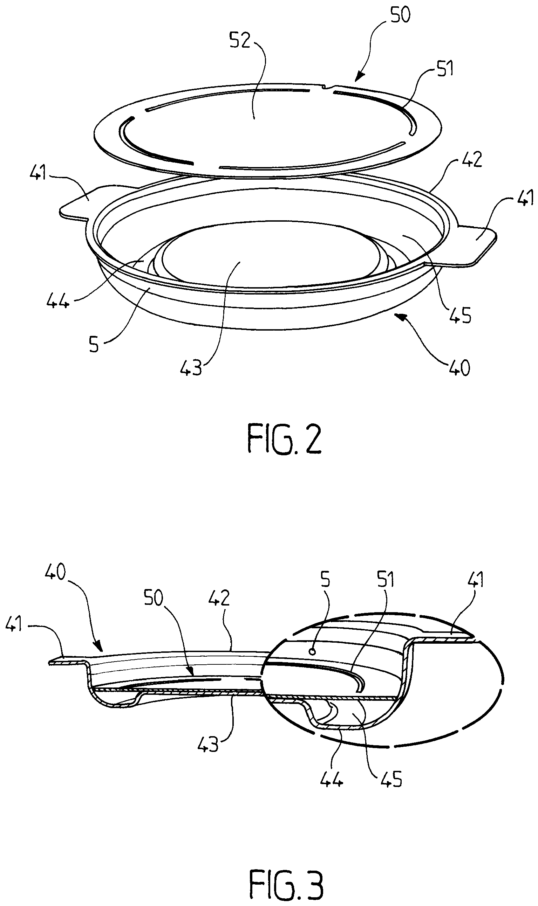

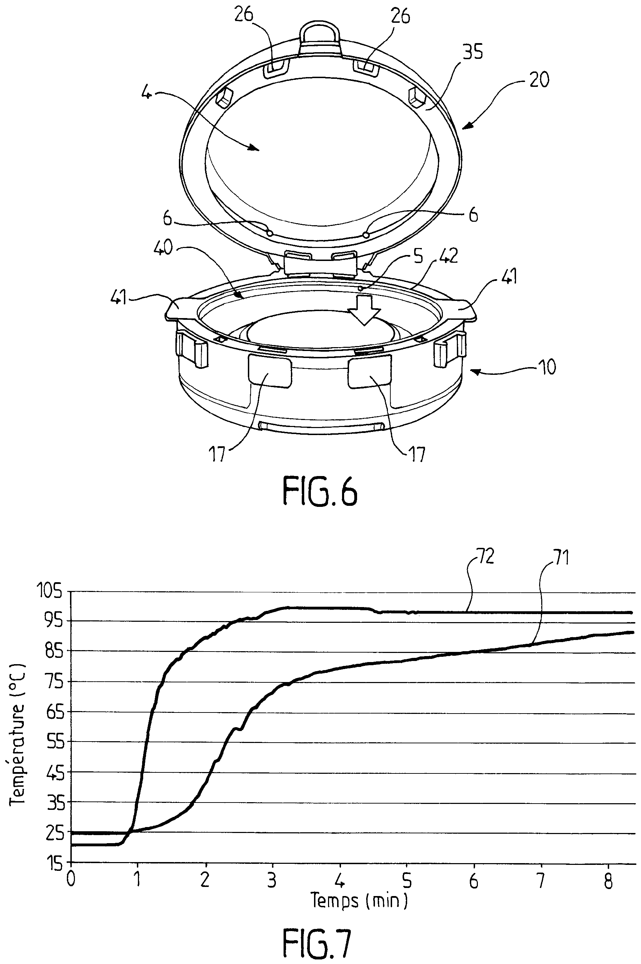

Tel que représenté sur la figure 2, le réceptacle 40 comporte deux poignées 41 agencées de manière opposée. Les poignées 41 sont issues d'une bordure supérieure 42 du réceptacle 40. Tel que visible sur la figure 6, les poignées 41 s'étendent à l'extérieur de l'appareil. Les poignées 41 s'étendent entre le corps principal 10 et le couvercle 20. Cette disposition facilite l'obtention de poignées froides. En alternative ou en complément, le réceptacle 40 et/ou les poignées 41 peuvent être réalisés en matériau peu conducteur de chaleur, par exemple en matière plastique ou en acier inoxydable.

De préférence, le réceptacle 40 comporte au moins un espace de récupération de jus 45. Tel que visible sur les figures 2 et 3, le fond du réceptacle 40 présente une partie surélevée 43. Une gorge annulaire périphérique 44 entoure la partie surélevée 43 du fond du réceptacle 40 et forme l'espace de récupération de jus 45.

Tel que représenté sur la figure 1, le réceptacle 40 est ajusté dans le corps principal 10. La bordure supérieure 42 du réceptacle 40 repose sur un rebord interne 15 du corps principal 10, mieux visible sur la figure 4. Ainsi l'espace entre le réceptacle 40 et le corps principal 10 reste confiné. Le rebord interne 15 du corps principal 10 est prolongé par des échancrures 16 prévues pour le passage des poignées 41 du réceptacle 40.

La figure 2 montre aussi un support ajouré 50 prévu pour être utilisé avec le réceptacle 40. Tel que représenté sur la figure 3, le réceptacle 40 porte le support ajouré 50 amovible. L'espace de récupération de jus 45 est agencé en dessous d'une partie ajourée 51 du support ajouré 50.

Le support ajouré 50 repose sur la partie surélevée 43 du réceptacle 40 et s'étend au dessus de la gorge annulaire périphérique 44. Le support ajouré 50 comporte une partie ajourée 51 agencée au dessus de la gorge annulaire périphérique 44 formant l'espace de récupération de jus 45. Le support ajouré 50 comporte une partie non ajourée 52 agencée au dessus de la partie surélevée 43 du fond du réceptacle 40. Ainsi l'espace de récupération de jus 45 est annulaire et s'étend autour de la partie surélevée 43 du fond du réceptacle 40 exposée au flux de vapeur issu du dispositif de production de vapeur 1.

Tel que visible sur la figure 1, le réceptacle 40 est porté par le corps principal 10. Le réceptacle 40 est monté amovible par rapport au corps principal 10. La partie surélevée 43 du fond du réceptacle 40 s'étend au dessus de l'élément chauffant 31. Ainsi la partie non ajourée 52 du support ajouré 50 est agencée au dessus de l'élément chauffant 31 et du réservoir d'eau 30.

Dans l'exemple de réalisation illustré sur les figures, le couvercle 20 est monté mobile par rapport au corps principal 10 entre une position relevée pour la mise en place des aliments dans le réceptacle 40 et/ou le retrait des aliments du réceptacle 40, illustrée sur les figures 4, 5 et 6 et une position abaissée pour cuire et/ou chauffer les aliments disposés dans le réceptacle 40, illustrée sur la figure 1. Le corps principal 10 comporte à cet effet au moins un organe de déverrouillage 17 associé à un organe d'accrochage (non représenté sur les figures), prévu pour venir avec un organe de retenue 26 appartenant au couvercle 20.

L'appareil pour cuire et/ou chauffer des aliments comporte une chambre d'expansion de vapeur 3 alimentée en vapeur par le dispositif de production de vapeur 1. La chambre d'expansion de vapeur 3 est adjacente à l'enceinte 2.

Dans l'exemple de réalisation illustré sur les figures, la chambre d'expansion de vapeur 3 est agencée au dessus de l'enceinte 2. Plus particulièrement, la chambre d'expansion de vapeur 3 est agencée dans le couvercle 20. En d'autres termes, le couvercle 20 porte la chambre d'expansion de vapeur 3.

La chambre d'expansion de vapeur 3 comporte une paroi de confinement 4 délimitant partiellement l'enceinte 2. La paroi de confinement 4 est déformable et/ou mobile.

Par ailleurs, dans l'exemple de réalisation illustré sur les figures, l'enceinte 2 est délimitée partiellement par le réceptacle 40 amovible.

Dans l'exemple de réalisation illustré sur les figures, le couvercle 20 comporte une coque extérieure 22 avantageusement articulée sur le corps principal 10, ainsi qu'une coque inférieure 23 ménageant une cavité 24 présentant une ouverture inférieure. La paroi de confinement 4 est portée par le couvercle 20. La paroi de confinement 4 est agencée sous la coque inférieure 23 et délimite ainsi avec la coque inférieure 23 la chambre d'expansion de vapeur 3. La paroi de confinement 4 est agencée au dessus du réceptacle 40. Le couvercle 20 porte une bague d'étanchéité 35 prenant appui sur une bordure supérieure 42 du réceptacle 40. Ainsi la bague d'étanchéité 35 appartient à une partie de l'enceinte 2 mobile par rapport au réceptacle 40. La périphérie de la paroi de confinement 4 est insérée entre la bague d'étanchéité 35 et le couvercle 20. L'enceinte 2 est ainsi délimitée par le réceptacle 40, la bague d'étanchéité 35 et la paroi de confinement 4. La paroi de confinement 4 est mobile par rapport au réceptacle 40 lorsque le couvercle ferme l'enceinte 2.

Selon une forme de réalisation préférée illustrée sur les figures, la paroi de confinement 4 se présente sous la forme d'une feuille de matériau souple élastiquement déformable. La paroi de confinement 4 est avantageusement réalisée en FEP (copolymère éthylène-propylène fluoré, ou tetrafluorethylène-perfluorpropylène), ce matériau présentant l'avantage d'être moins sensible à l'imprégnation des odeurs des aliments que les silicones.

Tel que visible sur la figure 1, la paroi de confinement 4 présente une position de repos au moins partiellement rentrée à l'intérieur du couvercle 20. Ainsi la paroi de confinement 4 présente une position de repos au moins partiellement concave par rapport à l'enceinte 2.

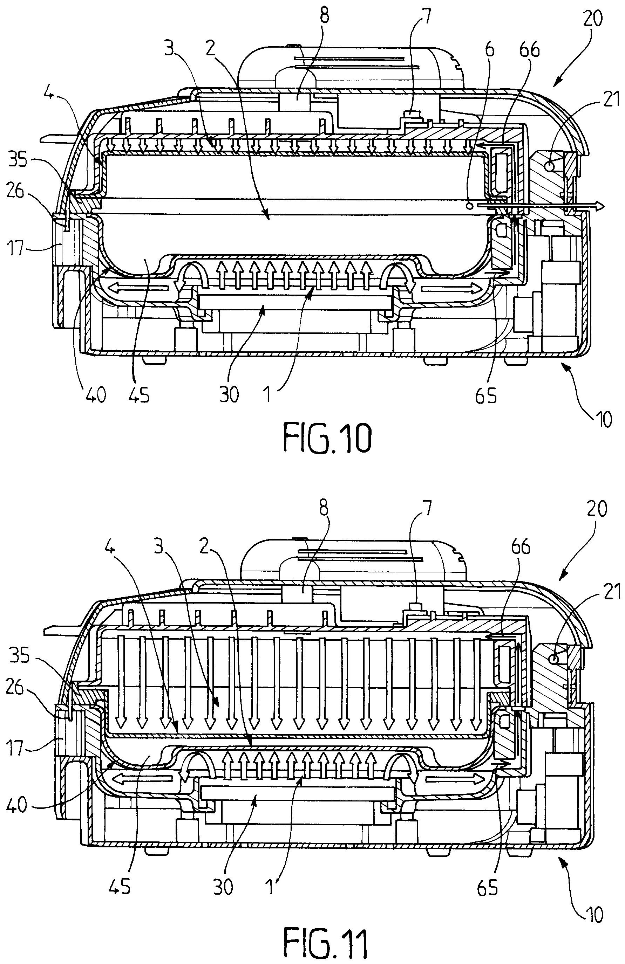

Dans l'exemple de réalisation illustré sur les figures, la chambre d'expansion de vapeur 3 est alimentée en vapeur depuis le dispositif de production de vapeur 1 par au moins un premier conduit 65 ménagé dans le corps principal 10, reliant une partie inférieure du corps principal 10 en dessous du réceptacle 40 à une partie supérieure du corps principal 10 à l'extérieur du rebord interne 15 du corps principal 10 portant le réceptacle 40, ledit premier conduit 65 étant relié à un second conduit 66 ménagé dans le couvercle 20, reliant une partie inférieure du couvercle 20 à l'extérieur de la paroi de confinement 4 à une face interne du couvercle 20 à l'intérieur de la paroi de confinement 4, tel que visible sur les figures 10 et 11.

Selon une forme de réalisation préférée, l'enceinte 2 comporte au moins une ouverture d'admission 5 communiquant avec le dispositif de production de vapeur 1 pour injecter de la vapeur dans l'enceinte 2. Des essais illustrés sur la figure 7 montrent que la montée en température dans l'enceinte 2 est plus rapide lorsque de la vapeur est admise dans l'enceinte 2, qu'en l'absence de vapeur admise dans l'enceinte 2 (pour atteindre 100°C, 3 min contre 8 min). La courbe 71 représente l'évolution de température dans l'enceinte 2 en l'absence de vapeur. La courbe 72 représente une évolution dans l'enceinte 2 lorsque de la vapeur est admise dans l'enceinte 2.

Dans l'exemple de réalisation illustré sur les figures, la ou les ouvertures d'admission 5 sont agencées dans le réceptacle 40. Tel que représenté sur la figure 3, une ouverture d'admission 5 est agencée au dessus du support ajouré 50. Tel que visible sur les figures 4 et 5, le corps principal 10 présente une ouverture latérale inférieure 60 agencée en dessous du réceptacle 40 et une ouverture latérale supérieure 61 agencée en regard de l'ouverture d'admission 5 agencée dans le réceptacle 40. L'ouverture latérale inférieure 60 est reliée à l'ouverture latérale supérieure 61 par un conduit de transfert 62 agencé dans la paroi interne du corps principal 10, tel que représenté schématiquement sur la figure 5.

Pour éviter de lessiver les aliments avec la vapeur, la ou les ouvertures d'admission 5 peuvent être obturées par la paroi de confinement 4 lorsque la chambre d'expansion de vapeur 3 est alimentée en vapeur par le dispositif de production de vapeur 1. Ainsi la paroi de confinement 4 déplacée par la vapeur présente dans la chambre d'expansion de vapeur 3 peut occuper au moins une position obturant la ou les ouvertures d'admission 5.

A titre de variante, le conduit de transfert 62 peut comporter une électrovanne 63 pour piloter l'admission de vapeur dans l'enceinte 2 indépendamment de l'admission de vapeur dans la chambre d'expansion de vapeur 3, tel que représenté sur la figure 5.

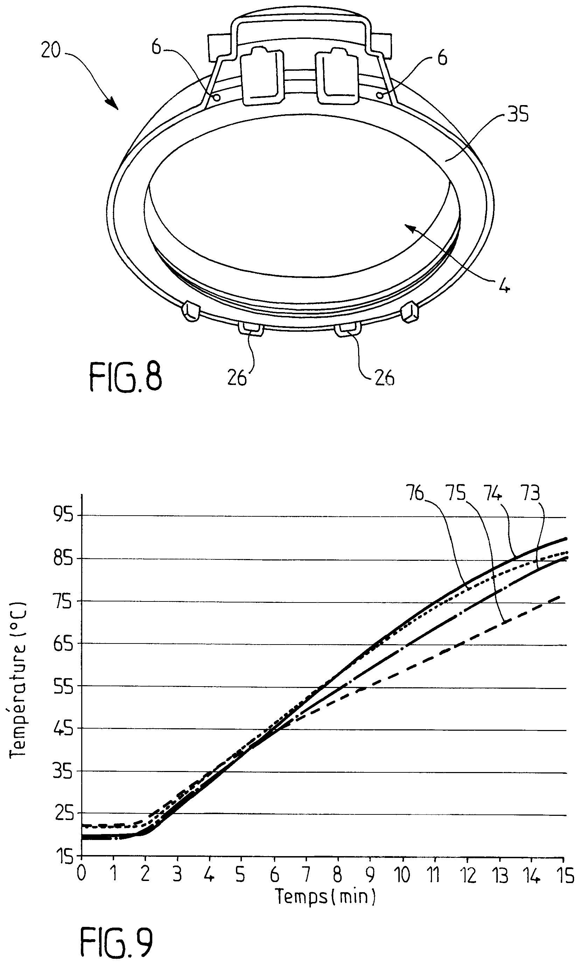

Selon une forme de réalisation préférée, l'enceinte 2 comporte au moins une ouverture d'évacuation 6 communiquant avec l'extérieur de l'appareil. Des essais illustrés sur la figure 9 montrent que la montée en température des aliments est plus rapide si l'air est expulsé de l'enceinte 2. Les courbes 73 et 74 représentent l'évolution de température dans un aliment lorsque l'air est expulsé de l'enceinte 2. Les courbes 75 et 76 représentent l'évolution de température dans un aliment en l'absence d'expulsion de l'air de l'enceinte 2.

Pour éviter les fuites thermiques après que l'air a été chassé de l'enceinte 2, la ou les ouvertures d'évacuation 6 peuvent être obturées par la paroi de confinement 4 lorsque la chambre d'expansion de vapeur 3 est alimentée en vapeur par le dispositif de production de vapeur 1. Ainsi la paroi de confinement 4 déplacée par la vapeur présente dans la chambre d'expansion de vapeur 3 peut occuper au moins une position obturant la ou les ouvertures d'évacuation 6.

Dans l'exemple de réalisation illustré sur les figures, la ou les ouvertures d'évacuation 6 sont ménagées dans la bague d'étanchéité 35. La figure 8 montre deux ouvertures d'évacuation 6 ménagées dans la bague d'étanchéité 35 au niveau de l'articulation du couvercle 20.

La figure 10 montre une ouverture d'évacuation 6, communiquant avec l'extérieur de l'appareil. Dans la configuration de la figure 11, la paroi de confinement 4 s'étend dans le réceptacle 40 et obture la ou les ouvertures d'amission 5 ainsi que la ou les ouvertures d'évacuation 6 (non visibles sur la figure 11). Le support ajouré 50 n'est pas représenté sur les figures 10 et 11, mais peut être mis en place dans le réceptacle 40 si désiré.

L'appareil comporte des moyens de commande 7 pour piloter la production de vapeur du dispositif de production de vapeur 1 en fonction de la pression de vapeur régnant dans la chambre d'expansion de vapeur 3.

Dans l'exemple de réalisation illustré sur les figures, les moyens de commande 7 comprennent un pressostat basse pression mesurant la pression dans la chambre d'expansion de vapeur 3. Le pressostat est couplé à un contacteur pour piloter l'alimentation électrique de l'élément chauffant 31. Le pressostat présente un seuil haut, par exemple 4 mbar, et un seuil bas, par exemple 2,5 mbar. Tant que la pression dans la chambre d'expansion de vapeur 3 reste inférieure au seuil haut, l'élément chauffant 31 est alimenté électriquement. Si la pression dans la chambre d'expansion de vapeur 3 dépasse le seuil haut, l'alimentation électrique de l'élément chauffant 31 est interrompue. L'alimentation électrique de l'élément chauffant 31 reste interrompue tant que la pression dans la chambre d'expansion de vapeur 3 reste supérieure au seuil bas. Si la pression dans la chambre d'expansion de vapeur 3 retombe en dessous du seuil bas, l'élément chauffant 31 est alimenté électriquement de nouveau.

A titre de variante, les moyens de commande 7 peuvent notamment comprendre un capteur de température agencé pour mesurer la température à l'intérieur de la chambre d'expansion de vapeur 3, afin de piloter l'alimentation électrique de l'élément chauffant 31 et/ou de piloter une électrovanne pour réguler la pression à l'intérieur de la chambre d'expansion de vapeur 3.

Une soupape de sécurité 8 peut être prévue pour mettre en communication la chambre d'expansion de vapeur 3 avec l'extérieur en cas de surpression. Dans l'exemple de réalisation illustré sur les figures, la soupape de sécurité 8 est montée sur le couvercle 20.

L'appareil selon l'invention fonctionne et s'utilise de la manière suivante :
L'utilisateur ouvre l'enceinte 2, remplit le réservoir d'eau 30 et place les aliments dans l'enceinte 2. L'utilisateur peut disposer les aliments dans le réceptacle 40 en place dans l'enceinte 2. L'utilisateur peut aussi placer dans l'enceinte 2 le réceptacle 40 contenant les aliments. Si désiré l'utilisateur peut placer les aliments sur le support ajouré 50 disposé dans le réceptacle 40.

Après avoir refermé l'enceinte 2, l'utilisateur peut mettre en fonctionnement l'appareil. L'élément chauffant 31 est alors alimenté électriquement. Le dispositif de production de vapeur 1 commence à produire de la vapeur qui se dirige dans la chambre d'expansion de vapeur 3 d'une part, et dans l'enceinte 2 par la ou les ouvertures d'amission 5. La vapeur remplit progressivement la chambre d'expansion de vapeur 3. La vapeur présente dans la chambre d'expansion de vapeur 3 tend à déformer la paroi de confinement 4 vers l'enceinte 2. La vapeur admise dans l'enceinte 2 par la ou les ouvertures d'admission 5 tend à chasser l'air présent dans l'enceinte 2 par la ou les ouvertures d'évacuation 6, tel que visible sur la figure 10. La paroi de confinement 4 déformée vers l'enceinte 2 obture d'abord la ou les ouvertures d'évacuation 6, en atteignant la bague d'étanchéité 35. La paroi de confinement 4 déformée vers l'enceinte 2 obture ensuite la ou les ouvertures d'admission 5, en atteignant la portion supérieure du réceptacle 40. La paroi de confinement 4 déformée vers l'enceinte 2 vient envelopper la partie supérieure des aliments placés dans l'enceinte 2, ce qui améliore le transfert thermique entre la paroi de confinement 4 échauffée par la vapeur présente dans la chambre d'expansion de vapeur 3 et les aliments présents dans l'enceinte 2. Tant que la pression à l'intérieur de la chambre d'expansion de vapeur 3 reste inférieure au seuil haut, l'élément chauffant 31 reste alimenté électriquement. Cette phase de fonctionnement est une phase de préchauffage, ou phase de montée en température. Lorsque la pression à l'intérieur de la chambre d'expansion de vapeur 3 dépasse le seuil haut, l'alimentation électrique de l'élément chauffant 31 est coupée jusqu'à ce que la pression à l'intérieur de la chambre d'expansion de vapeur 3 repasse en dessous du seuil bas, puis rétablie jusqu'à ce que la pression à l'intérieur de la chambre d'expansion de vapeur 3 repasse au dessus du seuil haut et ainsi de suite. Cette autre phase de fonctionnement est une phase de chauffe et/ou de cuisson, ou phase de régulation, utilisant la pression régnant à l'intérieur de la chambre d'expansion de vapeur 3 pour contrôler l'alimentation électrique de l'élément chauffant 31. Le contrôle de la pression de vapeur dans la chambre d'expansion de vapeur 3 permet d'éviter d'exercer une pression trop forte sur les aliments. Lorsque le support ajouré 50 est utilisé, les jus de cuisson peuvent être recueillis dans l'espace de récupération de jus 45 du réceptacle 40. Lorsque le temps de cuisson et/ou de chauffe des aliments souhaité est atteint, l'alimentation électrique de l'élément chauffant 31 est interrompue. Cette interruption peut être réalisée manuellement par l'utilisateur ou de manière automatique par une minuterie ou par un programme de cuisson. L'utilisateur peut alors ouvrir l'enceinte 2 pour retirer les aliments chauffés et/ou cuits. Si désiré, l'utilisateur peut saisir le réceptacle 40 par les poignées 41 s'étendant à l'extérieur de l'appareil, et le retirer de l'appareil, pour l'emporter sur la table.

L'invention concerne également un procédé pour cuire et/ou chauffer des aliments consistant à alimenter en vapeur la chambre d'expansion de vapeur 3 comportant la paroi de confinement 4 déformable et/ou mobile et délimitant partiellement l'enceinte 2 recevant les aliments à chauffer et/ou à cuire.

De manière préférée, le procédé consiste à alimenter l'enceinte 2 en vapeur avant de réaliser au moins une phase de chauffe et/ou de cuisson sans alimenter l'enceinte 2 en vapeur, pour obtenir une montée en température plus rapide des aliments présents dans l'enceinte 2.

Selon un mode de réalisation, le procédé consiste à alimenter l'enceinte 2 en vapeur pendant une durée déterminée, de préférence au début de la production de vapeur, par exemple entre 1 min et 3 min.

Selon un autre mode de réalisation, le procédé consiste à utiliser l'enceinte 2 comportant au moins une ouverture d'admission 5 alimentée en vapeur, pour injecter de la vapeur dans l'enceinte par la ou les ouvertures d'admission dans une première phase, et à utiliser l'alimentation en vapeur de la chambre d'expansion de vapeur pour obturer la ou les ouvertures d'admission 5 avec la paroi de confinement 4 dans une seconde phase.

De manière préférée alors, le procédé consiste à utiliser une enceinte 2 comportant au moins une ouverture d'évacuation 6 et à alimenter l'enceinte 2 en vapeur pour chasser l'air présent dans l'enceinte par la ou les ouvertures d'évacuation 6.

Le procédé peut consister à utiliser l'alimentation en vapeur de la chambre d'expansion de vapeur 3 pour obturer la ou les ouvertures d'évacuation 6 avec la paroi de confinement 4.

De manière préférée encore, le procédé consiste à réguler la pression régnant dans la chambre d'expansion de vapeur 3.

Avantageusement alors, le procédé consiste à limiter la pression régnant dans la chambre d'expansion de vapeur 3 à une valeur inférieure ou égale à 10 millibars, et de préférence inférieure ou égale à 5 millibars.

L'invention concerne également un appareil pour cuire et/ou chauffer des aliments comportant des moyens de commande pour piloter la production de vapeur du dispositif de production de vapeur 1 en utilisant le procédé selon l'une au moins des caractéristiques précitées.

Dans l'exemple de réalisation illustré sur les figures 1 à 11, les moyens de commande comprennent le pressostat associé à l'élément chauffant 31.

Tel que bien visible sur les figures 1, 10 et 11, la paroi de confinement 4 délimite une partie supérieure de l'enceinte 2.

A titre de variante, la paroi de confinement 4 n'est pas nécessairement réalisée entièrement en matériau souple élastiquement déformable. La paroi de confinement 4 peut être au moins partiellement réalisée en matériau souple élastiquement déformable. Notamment la paroi de confinement 4 peut comporter au moins une partie rigide, et/ou plusieurs parties ou portions de rigidité différente.

A titre de variante la paroi de confinement 4 ne présente pas nécessairement une position de repos concave par rapport à l'enceinte 2. La paroi de confinement 4 peut notamment présenter une position de repos au moins partiellement concave par rapport à l'enceinte 2. La paroi de confinement 4 peut aussi venir au contact des aliments présents dans l'enceinte 2 avant que la vapeur soit admise dans la chambre d'expansion de vapeur 3.

A titre de variante, l'espace de récupération de jus 45 du réceptacle 40 n'est pas nécessairement annulaire.

A titre de variante, la ou les ouvertures d'admission 5 ne sont pas nécessairement agencées dans le réceptacle 40. La ou les ouvertures d'admission 5 peuvent notamment être agencées entre le réceptacle 40 et le couvercle 20, ou dans le couvercle 20. A titre de variante, l'enceinte 2 ne comporte pas nécessairement au moins une ouverture d'admission 5.

A titre de variante, le dispositif de production de vapeur 1 ne comporte pas nécessairement un élément chauffant 31 agencé dans le fond d'un réservoir d'eau 30. Le dispositif de production de vapeur 1 peut notamment comporter une chaudière, tubulaire ou non, alimentée par un réservoir d'eau, si désiré au moyen d'une pompe, la chaudière comprenant ou étant associée à un élément chauffant.

A titre de variante, le dispositif de production de vapeur 1 n'est pas nécessairement disposé sous le réceptacle 40. Le dispositif de production de vapeur 1 peut par exemple être agencé dans le corps principal 10 latéralement par rapport à l'enceinte 2.

A titre de variante, le dispositif de production de vapeur 1 peut être agencé pour alimenter en vapeur la chambre d'expansion de vapeur 3 et pour chauffer le réceptacle 40, sans que l'alimentation en vapeur de la chambre d'expansion de vapeur 3 soit nécessairement couplée au chauffage du réceptacle 40 par la vapeur. En d'autres termes, un pilotage indépendant de l'alimentation en vapeur de la chambre d'expansion de vapeur 3 par le dispositif de production de vapeur 1 et du chauffage du réceptacle 40 peut être envisagé.

A titre de variante, le chauffage du réceptacle 40 n'est pas nécessairement assuré par le dispositif de production de vapeur 1.

De préférence alors, le chauffage du réceptacle 40 est assuré par un dispositif électrique de chauffe indépendant du dispositif de production de vapeur 1. Le dispositif électrique de chauffe peut notamment comporter un élément chauffant électrique agencé sous le réceptacle 40. L'élément chauffant électrique peut par exemple être rapporté sous le réceptacle 40, ou appartenir à une plaque de chauffe électrique portant le réceptacle 40 amovible.

En alternative, le chauffage du réceptacle 40 peut notamment être assuré par un autre dispositif de production de vapeur indépendant du dispositif de production de vapeur 1 alimentant la chambre d'expansion de vapeur 3.

A titre de variante, le dispositif de production de vapeur 1 n'est pas nécessairement agencé dans le corps principal 10. Le dispositif de production de vapeur 1 peut notamment être agencé dans le couvercle 20.

A titre de variante, le couvercle 20 n'est pas nécessairement monté mobile sur le corps principal 10. Si désiré, le couvercle 20 peut être monté amovible sur le corps principal 10.

A titre de variante, l'enceinte 2 n'est pas nécessairement délimitée par un couvercle 20. L'appareil ne comporte pas nécessairement un boîtier comprenant un corps principal 10 formant une embase recevant un couvercle 20. L'enceinte 2 peut notamment être délimitée par une porte montée pour obturer une cavité formée dans un corps principal.

A titre de variante, la chambre d'expansion de vapeur 3 n'est pas nécessairement agencée dans le couvercle 20. Ainsi la paroi de confinement 4 n'est pas nécessairement portée par le couvercle 20. La chambre d'expansion de vapeur 3 peut notamment être agencée dans la partie supérieure d'une cavité formée dans un corps principal et présentant une ouverture latérale fermée par une porte. Ainsi l'appareil pour cuire et/ou chauffer des aliments ne comporte pas nécessairement un couvercle. L'appareil pour cuire et/ou chauffer des aliments peut notamment comporter un corps principal ménageant un espace prévu pour recevoir un réceptacle, la paroi de confinement étant portée par une partie du corps principal s'étendant au-dessus dudit espace, le corps principal présentant au moins une ouverture latérale prévue pour l'insertion et le retrait du réceptacle. La paroi de confinement 4 délimite alors également une partie supérieure de l'enceinte 2. Si désiré, l'ouverture latérale peut être fermée par une porte. Si désiré, l'ouverture latérale peut s'étendre sur plusieurs côtés du corps principal, et/ou plusieurs ouvertures latérales peuvent être prévues.

A titre de variante, l'enceinte 2 n'est pas nécessairement partiellement délimitée par un réceptacle 40 amovible. Si désiré, l'enceinte 2 peut notamment être partiellement délimitée par le corps principal de l'appareil. De préférence alors, le corps principal de l'appareil forme un réceptacle. Si désiré encore, les aliments peuvent être disposés dans au moins un récipient amovible et/ou sur au moins un support amovible placé dans l'enceinte 2.

A titre de variante, le placage de la paroi de confinement 4 sur les aliments n'est pas nécessairement assuré uniquement par la vapeur admise dans la chambre d'expansion de vapeur 3. Le placage de la paroi de confinement 4 sur les aliments peut notamment être assuré au moins en partie par une pompe agencée pour injecter de l'air dans la chambre d'expansion de vapeur 3, et/ou pour aspirer au moins une partie de l'air présent dans l'enceinte 2, de manière à déformer et/ou déplacer la paroi de confinement 4 vers l'intérieur de l'enceinte 2. Ces dispositions procurent un meilleur placage de la paroi de confinement 4 sur les aliments. Ces dispositions permettent également de s'affranchir des phénomènes de condensation intervenant dans la chambre d'expansion de vapeur 3. La pompe peut notamment être agencée dans le corps principal 10, ou être portée par le couvercle 20.

Le procédé pour cuire et/ou chauffer des aliments en utilisant de la vapeur peut alors comprendre une étape consistant à injecter de l'air dans la chambre d'expansion de vapeur 3, pour déformer et/ou déplacer la paroi de confinement 4 vers l'intérieur de l'enceinte 2. Cette étape peut par exemple intervenir après l'arrêt de l'alimentation en vapeur de la chambre d'expansion de vapeur 3 par le dispositif de production de vapeur 1.

En alternative ou en complément, le procédé pour cuire et/ou chauffer des aliments en utilisant de la vapeur peut alors comprendre une étape consistant à aspirer au moins une partie de l'air présent dans l'enceinte 2, pour déformer et/ou déplacer la paroi de confinement 4 vers l'intérieur de l'enceinte 2. Cette étape peut par exemple intervenir avant le début de l'alimentation en vapeur de la chambre d'expansion de vapeur 3 par le dispositif de production de vapeur 1.

La présente invention n'est nullement limitée à l'exemple de réalisation décrit et à ses variantes, mais englobe de nombreuses modifications dans le cadre des revendications.

## Revendications

1. Procédé pour cuire et/ou chauffer des aliments, **caractérisé en ce qu'**il consiste à alimenter en vapeur une chambre d'expansion de vapeur (3) comportant une paroi de confinement (4) déformable et/ou mobile délimitant partiellement une enceinte (2) recevant des aliments à chauffer et/ou à cuire.

2. Procédé pour cuire et/ou chauffer des aliments selon la revendication 1, **caractérisé en ce qu'**il consiste à alimenter l'enceinte (2) en vapeur avant de réaliser au moins une phase de chauffe et/ou de cuisson sans alimenter l'enceinte (2) en vapeur.

3. Procédé pour cuire et/ou chauffer des aliments selon l'une des revendications 1 ou 2, **caractérisé en ce qu'**il consiste à utiliser une enceinte (2) comportant au moins une ouverture d'admission (5) alimentée en vapeur, pour injecter de la vapeur dans l'enceinte (2) par la ou les ouvertures d'admission (5) dans une première phase, et à utiliser l'alimentation en vapeur de la chambre d'expansion de vapeur (3) pour obturer la ou les ouvertures d'admission avec la paroi de confinement (4) dans une seconde phase.

4. Procédé pour cuire et/ou chauffer des aliments selon l'une des revendications 1 à 3, **caractérisé en ce qu'**il consiste à utiliser une enceinte (2) comportant au moins une ouverture d'évacuation (6) et à alimenter l'enceinte (2) en vapeur pour chasser l'air présent dans l'enceinte (2) par la ou les ouvertures d'évacuation (6).

5. Procédé pour cuire et/ou chauffer des aliments selon la revendication 4, **caractérisé en ce qu'**il consiste à utiliser l'alimentation en vapeur de la chambre d'expansion de vapeur (3) pour obturer la ou les ouvertures d'évacuation (6) avec la paroi de confinement (4).

6. Procédé pour cuire et/ou chauffer des aliments selon l'une des revendications 1 à 5, **caractérisé en ce qu'**il consiste à réguler la pression régnant dans la chambre d'expansion de vapeur (3).

7. Procédé pour cuire et/ou chauffer des aliments selon la revendication 6, **caractérisé en ce qu'**il consiste à limiter la pression régnant dans la chambre d'expansion de vapeur (3) à une valeur inférieure ou égale à 10 millibars, et de préférence inférieure ou égale à 5 millibars.

8. Procédé pour cuire et/ou chauffer des aliments selon l'une des revendications 1 à 7, **caractérisé en ce qu'**il comprend une étape consistant à injecter de l'air dans la chambre d'expansion de vapeur (3), pour déformer et/ou déplacer la paroi de confinement (4) vers l'intérieur de l'enceinte (2).

9. Procédé pour cuire et/ou chauffer des aliments selon l'une des revendications 1 à 8, **caractérisé en ce qu'**il comprend une étape consistant à aspirer au moins une partie de l'air présent dans l'enceinte (2), pour déformer et/ou déplacer la paroi de confinement (4) vers l'intérieur de l'enceinte (2).

10. Procédé pour cuire et/ou chauffer des aliments selon l'une des revendications 1 à 9, dans lequel la chambre d'expansion de vapeur (3) est adjacente à l'enceinte (2).

11. Appareil pour cuire et/ou chauffer des aliments, comportant un dispositif de production de vapeur (1) et une enceinte (2) pour recevoir les aliments à chauffer et/ou à cuire, **caractérisé en ce qu'**il comporte une chambre d'expansion de vapeur (3) alimentée en vapeur par le dispositif de production de vapeur (1), et **en ce que** la chambre d'expansion de vapeur (3) comporte une paroi de confinement (4) déformable et/ou mobile délimitant partiellement l'enceinte (2).

12. Appareil pour cuire et/ou chauffer des aliments selon la revendication 11, **caractérisé en ce que** la paroi de confinement (4) est au moins partiellement réalisée en matériau souple élastiquement déformable.

13. Appareil pour cuire et/ou chauffer des aliments selon la revendication 12, **caractérisé en ce que** la paroi de confinement (4) présente une position de repos au moins partiellement concave par rapport à l'enceinte (2).

14. Appareil pour cuire et/ou chauffer des aliments selon l'une des revendications 11 à 13, **caractérisé en ce que** l'enceinte (2) est délimitée partiellement par un réceptacle (40) amovible.

15. Appareil pour cuire et/ou chauffer des aliments selon la revendication 14, **caractérisé en ce que** le réceptacle (40) porte un support ajouré (50) amovible et présente un espace de récupération de jus (45) agencé en dessous d'une partie ajourée (51) du support ajouré (50).

16. Appareil pour cuire et/ou chauffer des aliments selon l'une des revendications 11 à 15, **caractérisé en ce que** l'enceinte (2) comporte au moins une ouverture d'admission (5) communiquant avec le dispositif de production de vapeur (1) pour injecter de la vapeur dans l'enceinte (2).

17. Appareil pour cuire et/ou chauffer des aliments selon les revendications 14 et 16, **caractérisé en ce que** la ou les ouvertures d'admission (5) sont agencées dans le réceptacle (40).

18. Appareil pour cuire et/ou chauffer des aliments selon l'une des revendications 16 ou 17, **caractérisé en ce que** la paroi de confinement (4) déplacée par la vapeur présente dans la chambre d'expansion de vapeur (3) peut occuper au moins une position obturant la ou les ouvertures d'admission (5).

19. Appareil pour cuire et/ou chauffer des aliments selon l'une des revendications 11 à 18, **caractérisé en ce que** l'enceinte (2) comporte au moins une ouverture d'évacuation (6) communiquant avec l'extérieur de l'appareil.

20. Appareil pour cuire et/ou chauffer des aliments selon la revendication 19, **caractérisé en ce que** la ou les ouvertures d'évacuation (6) sont ménagées dans une bague d'étanchéité (35) appartenant à une partie de l'enceinte (2) mobile par rapport au réceptacle (40).

21. Appareil pour cuire et/ou chauffer des aliments selon l'une des revendications 19 ou 20, **caractérisé en ce que** la paroi de confinement (4) déplacée par la vapeur présente dans la chambre d'expansion de vapeur (3) peut occuper au moins une position obturant la ou les ouvertures d'évacuation (6).

22. Appareil pour cuire et/ou chauffer des aliments selon l'une des revendications 11 à 21, **caractérisé en ce qu'**il comporte une pompe agencée pour injecter de l'air dans la chambre d'expansion de vapeur (3), de manière à déformer et/ou déplacer la paroi de confinement (4) vers l'intérieur de l'enceinte (2).

23. Appareil pour cuire et/ou chauffer des aliments selon l'une des revendications 11 à 22, **caractérisé en ce qu'**il comporte une pompe agencée pour aspirer au moins une partie de l'air présent dans l'enceinte (2), de manière à déformer et/ou déplacer la paroi de confinement (4) vers l'intérieur de l'enceinte (2).

24. Appareil pour cuire et/ou chauffer des aliments selon l'une des revendications 11 à 23, **caractérisé en ce que** la chambre d'expansion de vapeur (3) est adjacente à l'enceinte (2).

25. Appareil pour cuire et/ou chauffer des aliments selon l'une des revendications 11 à 24, **caractérisé en ce qu'**il comporte des moyens de commande (7) pour piloter la production de vapeur du dispositif de production de vapeur (1) en fonction de la pression de vapeur régnant dans la chambre d'expansion de vapeur (3).

26. Appareil pour cuire et/ou chauffer des aliments selon la revendication 25, **caractérisé en ce que** les moyens de commande (7) sont prévus pour mettre en œuvre le procédé pour cuire et/ou chauffer des aliments en utilisant de la vapeur selon l'une des revendications 1 à 10.

## Patentansprüche

1. Verfahren zum Garen und/oder Erhitzen von Nahrungsmitteln, **dadurch gekennzeichnet, dass** es darin besteht, eine Dampfausdehnungskammer (3), die eine verformbare und/oder bewegliche Einschlusswand (4) umfasst, die einen Einschluss (2), der Nahrungsmittel, die zu erhitzen und/oder zu garen sind, aufnimmt, teilweise abgrenzt, mit Dampf zu versorgen.

2. Verfahren zum Garen und/oder Erhitzen von Nahrungsmitteln nach Anspruch 1, **dadurch gekennzeichnet, dass** es darin besteht, den Einschluss (2) mit Dampf zu versorgen, bevor mindestens eine Erhitzungs- und/oder Garphase ohne Versorgen des Einschlusses (2) mit Dampf ausgeführt wird.

3. Verfahren zum Garen und/oder Erhitzen von Nahrungsmitteln nach einem der Ansprüche 1 oder 2, **dadurch gekennzeichnet, dass** es darin besteht, einen Einschluss (2) zu verwenden, der mindestens eine Einlassöffnung (5) umfasst, die mit Dampf versorgt wird, um Dampf in den Einschluss (2) durch die Einlassöffnung(en) (5) in einer ersten Phase einzuspritzen, und um die Dampfversorgung der Dampfausdehnungskammer (3) zu verwenden, um die Einlassöffnung(en) mit der Einschlusswand (4) in einer zweiten Phase zu verschließen.

4. Verfahren zum Garen und/oder Erhitzen von Nahrungsmitteln nach einem der Ansprüche 1 bis 3, **dadurch gekennzeichnet, dass** es darin besteht, einen Einschluss (2) zu verwenden, der mindestens eine Auslassöffnung (6) umfasst, und den Einschluss (2) mit Dampf zu versorgen, um die Luft, die in dem Einschluss (2) vorliegt, durch die Auslassöffnung(en) (6) auszutreiben.

5. Verfahren zum Garen und/oder Erhitzen von Nahrungsmitteln nach Anspruch 4, **dadurch gekennzeichnet, dass** es darin besteht, die Dampfversorgung der Dampfausdehnungskammer (3) zu verwenden, um die Auslassöffnung(en) (6) mit der Einschlusswand (4) zu verschließen.

6. Verfahren zum Garen und/oder Erhitzen von Nahrungsmitteln nach einem der Ansprüche 1 bis 5, **dadurch gekennzeichnet, dass** es darin besteht, den Druck, der in der Dampfausdehnungskammer (3) herrscht, zu regeln.

7. Verfahren zum Garen und/oder Erhitzen von Nahrungsmitteln nach Anspruch 6, **dadurch gekennzeichnet, dass** es darin besteht, den Druck, der in der Dampfausdehnungskammer (3) herrscht, auf einen Wert kleiner oder gleich 10 Millibar, und vorzugsweise kleiner oder gleich 5 Millibar zu beschränken.

8. Verfahren zum Garen und/oder Erhitzen von Nahrungsmitteln nach einem der Ansprüche 1 bis 7, **dadurch gekennzeichnet, dass** es einen Schritt umfasst, der darin besteht, Luft in die Dampfausdehnungskammer (3) einzuspritzen, um die Einschlusswand (4) zu dem Inneren des Einschlusses (2) zu verformen und/oder zu verschieben.

9. Verfahren zum Garen und/oder Erhitzen von Nahrungsmitteln nach einem der Ansprüche 1 bis 8, **dadurch gekennzeichnet, dass** es einen Schritt umfasst, der darin besteht, mindestens einen Teil der Luft, die in dem Einschluss (2) vorliegt, anzusaugen, um die Einschlusswand (4) zu dem Inneren des Einschlusses (2) zu verformen und/oder zu verschieben.

10. Verfahren zum Garen und/oder Erhitzen von Nahrungsmitteln nach einem der Ansprüche 1 bis 9, wobei die Dampfausdehnungskammer (3) an den Einschluss (2) angrenzt.

11. Einrichtung zum Garen und/oder Erhitzen von Nahrungsmitteln, die eine Dampferzeugungsvorrichtung (1) und einen Einschluss (2) zum Aufnehmen der Nahrungsmittel, die zu erhitzen und/oder zu garen sind, umfasst, **dadurch gekennzeichnet, dass** es eine Dampfausdehnungskammer (3) umfasst, die von der Dampferzeugungsvorrichtung (1) mit Dampf versorgt wird, und dass die Dampfausdehnungskammer (3) eine Einschlusswand (4) umfasst, die verformbar und/oder beweglich ist, die den Einschluss (2) teilweise abgrenzt.

12. Einrichtung zum Garen und/oder Erhitzen von Nahrungsmitteln nach Anspruch 11, **dadurch gekennzeichnet, dass** die Einschlusswand (4) mindestens teilweise aus einem biegsamen, elastisch verformbaren Material hergestellt ist.

13. Einrichtung zum Garen und/oder Erhitzen von Nahrungsmitteln nach Anspruch 12, **dadurch gekennzeichnet, dass** die Einschlusswand (4) eine Ruheposition aufweist, die bezüglich des Einschlusses (2) mindestens teilweise konkav ist.

14. Einrichtung zum Garen und/oder Erhitzen von Nahrungsmitteln nach einem der Ansprüche 11 bis 13, **dadurch gekennzeichnet, dass** der Einschluss (2) teilweise durch einen abnehmbaren Behälter (40) abgegrenzt ist.

15. Einrichtung zum Garen und/oder Erhitzen von Nahrungsmitteln nach Anspruch 14, **dadurch gekennzeichnet, dass** der Behälter (40) einen abnehmbaren durchbrochenen Träger (50) trägt, und einen Raum zum Auffangen von Saft (45) aufweist, der unterhalb eines durchbrochenen Teils (51) des durchbrochenen Trägers (50) angeordnet ist.

16. Einrichtung zum Garen und/oder Erhitzen von Nahrungsmitteln nach einem der Ansprüche 11 bis 15, **dadurch gekennzeichnet, dass** der Einschluss (2) mindestens eine Einlassöffnung (5) umfasst, die mit der Dampferzeugungsvorrichtung (1) in Kommunikation steht, um Dampf in den Einschluss (2) einzuspritzen.

17. Einrichtung zum Garen und/oder Erhitzen von Nahrungsmitteln nach den Ansprüchen 14 und 16, **dadurch gekennzeichnet, dass** die Einlassöffnung(en) (5) in dem Behälter (40) angeordnet ist/sind.

18. Einrichtung zum Garen und/oder Erhitzen von Nahrungsmitteln nach einem der Ansprüche 16 oder 17, **dadurch gekennzeichnet, dass** die Einschlusswand (4), die von dem Dampf, der in der Dampfausdehnungskammer (3) vorliegt, verschoben wird, mindestens eine Position belegen kann, die die Einlassöffnung(en) (5) verschließt.

19. Einrichtung zum Garen und/oder Erhitzen von Nahrungsmitteln nach einem der Ansprüche 11 bis 18, **dadurch gekennzeichnet, dass** der Einschluss (2) mindestens eine Auslassöffnung (6), die mit dem Äußeren der Einrichtung in Kommunikation steht, umfasst.

20. Einrichtung zum Garen und/Erhitzen der Nahrungsmittel nach Anspruch 19, **dadurch gekennzeichnet, dass** die Auslassöffnung(en) (6) in einem Dichtring (35) angelegt sind, der zu einem Teil des Einschlusses (2) gehört, der bezüglich des Behälters (40) beweglich ist.

21. Einrichtung zum Garen und/oder Erhitzen von Nahrungsmitteln nach einem der Ansprüche 19 oder 20, **dadurch gekennzeichnet, dass** die Einschlusswand (4), die von dem Dampf, der in der Dampfausdehnungskammer (3) vorliegt, verschoben wird, mindestens eine Position belegen kann, die die Auslassöffnung(en) (6) verschließt.

22. Einrichtung zum Garen und/oder Erhitzen von Nahrungsmitteln nach einem der Ansprüche 11 bis 21, **dadurch gekennzeichnet, dass** sie eine Pumpe umfasst, die angeordnet ist, um Luft in die Dampfausdehnungskammer (3) einzuspritzen, sodass die Einschlusswand (4) zu dem Inneren des Einschlusses (2) verformt und/oder verschoben wird.

23. Einrichtung zum Garen und/oder Erhitzen von Nahrungsmitteln nach einem der Ansprüche 11 bis 22, **dadurch gekennzeichnet, dass** sie eine Pumpe umfasst, die angeordnet ist, um mindestens einen Teil der Luft, die in dem Einschluss (2) vorliegt, abzusaugen, sodass die Einschlusswand (4) zu dem Inneren des Einschlusses (2) verformt und/oder verschoben wird.

24. Einrichtung zum Garen und/oder Erhitzen von Nahrungsmitteln nach einem der Ansprüche 11 bis 23, **dadurch gekennzeichnet, dass** die Dampfausdehnungskammer (3) an den Einschluss (2) angrenzt.

25. Einrichtung zum Garen und/oder Erhitzen von Nahrungsmitteln nach einem der Ansprüche 11 bis 24, **dadurch gekennzeichnet, dass** sie Steuermittel (7) zum Steuern der Dampfproduktion der Dampferzeugungsvorrichtung (1) in Abhängigkeit von dem Dampfdruck, der in der Dampfausdehnungskammer (3) herrscht, umfasst.

26. Einrichtung zum Garen und/oder Erhitzen von Nahrungsmitteln nach Anspruch 25, **dadurch gekennzeichnet, dass** die Steuermittel (7) vorgesehen sind, um das Verfahren zum Garen und/oder Erhitzen von Nahrungsmitteln unter Verwenden des Dampfs nach einem der Ansprüche 1 bis 10 umzusetzen.

## Claims

1. Method for cooking and/or heating food, **characterised in that** it consists of supplying a steam expansion chamber (3) with steam, comprising a confinement wall (4) which is deformable and/or mobile, partially delimiting an enclosure (2) receiving food to be heated and/or to be cooked.

2. Method for cooking and/or heating food according to claim 1, **characterised in that** it consists of supplying the enclosure (2) with steam before carrying out at least one heating and/or cooking phase without supplying the enclosure (2) with steam.

3. Method for cooking and/or heating food according to any of claims 1 or 2, **characterised in that** it consists of using an enclosure (2) comprising at least one inlet opening (5) supplied with steam, to inject steam into the enclosure (2) through the inlet opening(s) (5) in a first phase, and to use the steam supply of the steam expansion chamber (3) to block the inlet opening(s) with the confinement wall (4) in a second phase.

4. Method for cooking and/or heating food according to any of claims 1 to 3, **characterised in that** it consists of using an enclosure (2) comprising at least one evacuation opening (6) and to supply the enclosure (2) with steam to repel the air present in the enclosure (2) through the evacuation opening(s) (6).

5. Method for cooking and/or heating food according to claim 4, **characterised in that** it consists of using the steam supply of the steam expansion chamber (3) to block the evacuation opening(s) (6) with the confinement wall (4).

6. Method for cooking and/or heating food according to any of claims 1 to 5, **characterised in that** it consists of adjusting the pressure within the steam expansion chamber (3).

7. Method for cooking and/or heating food according to claim 6, **characterised in that** it consists of limiting the pressure within the steam expansion chamber (3) to a value less than or equal to 10 millibars, and preferably less than or equal to 5 millibars.

8. Method for cooking and/or heating food according to any of claims 1 to 7, **characterised in that** it comprises a step consisting of injecting air into the steam expansion chamber (3), to deform and/or move the confinement wall (4) towards the inside of the enclosure (2).

9. Method for cooking and/or heating food according to any of claims 1 to 8, **characterised in that** it comprises a step consisting of suctioning at least partially the air present in the enclosure (2), to deform and/or move the confinement wall (4) towards the inside of the enclosure (2).

10. Method for cooking and/or heating food according to any of claims 1 to 9, wherein the steam expansion chamber (3) is adjacent to the enclosure (2).

11. Apparatus for cooking and/or heating food, comprising a steam production device (1) and an enclosure (2) for receiving food to be heated and/or to be cooked, **characterised in that** it comprises a steam expansion chamber (3) supplied with steam by the steam production device (1), and **in that** the steam expansion chamber (3) comprises a confinement wall (4) which is deformable and/or mobile, partially delimiting the enclosure (2).

12. Apparatus for cooking and/or heating food according to claim 11, **characterised in that** the confinement wall (4) is at least partially made of elastically deformable flexible material.

13. Apparatus for cooking and/or heating food according to claim 12, **characterised in that** the confinement wall (4) has an idle position at least partially concave with respect to the enclosure (2).

14. Apparatus for cooking and/or heating food according to any of claims 11 to 13, **characterised in that** the enclosure (2) is partially delimited by a removable receptacle (40).

15. Apparatus for cooking and/or heating food according to claim 14, **characterised in that** the receptacle (40) carries a removable perforated support (50) and has a space for recovering juice (45) arranged below a perforated portion (51) of the perforated support (50).

16. Apparatus for cooking and/or heating food according to any of claims 11 to 15, **characterised in that** the enclosure (2) comprises at least one inlet opening (5) communicating with the steam production device (1) for injecting steam into the enclosure (2).

17. Apparatus for cooking and/or heating food according to claims 14 and 16, **characterised in that** the inlet opening(s) (5) are arranged in the receptacle (40).

18. Apparatus for cooking and/or heating food according to any of claims 16 or 17, **characterised in that** the confinement wall (4) moved by the steam present in the steam expansion chamber (3) can occupy at least one position blocking the inlet opening(s) (5).

19. Apparatus for cooking and/or heating food according to any of claims 11 to 18, **characterised in that** the enclosure (2) comprises at least one evacuation opening (6) communicating with the outside of the device.

20. Apparatus for cooking and/or heating food according to claim 19, **characterised in that** the evacuation opening(s) (6) are disposed in a sealing ring (35) belonging to a portion of the enclosure (2), mobile with respect to the receptacle (40).

21. Apparatus for cooking and/or heating food according to any of claims 19 or 20, **characterised in that** the confinement wall (4) moved by the steam present in the steam expansion chamber (3) can occupy at least one position blocking the evacuation opening(s) (6).

22. Apparatus for cooking and/or heating food according to any of claims 11 to 21, **characterised in that** it comprises a pump arranged for injecting air into the steam expansion chamber (3), so as to deform and/or move the confinement wall (4) towards the inside of the enclosure (2).

23. Apparatus for cooking and/or heating food according to any of claims 11 to 22, **characterised in that** it comprises a pump arranged to suction at least some of the air present in the enclosure (2), so as to deform and/or move the confinement wall (4) towards the inside of the enclosure (2).

24. Apparatus for cooking and/or heating food according to any of claims 11 to 23, **characterised in that** the steam expansion chamber (3) is adjacent to the enclosure (2).

25. Apparatus for cooking and/or heating food according to any of claims 11 to 24, **characterised in that** it comprises control means (7) for controlling the steam production of the steam production device (1) according to the steam pressure within the steam expansion chamber (3).

26. Apparatus for cooking and/or heating food according to claim 25, **characterised in that** the control means (7) are provided to implement the method for cooking and/or heating food by using steam according to any of claims 1 to 10.
